# EUROPEAN PATENT APPLICATION

(11) **EP 3 851 503 A1**
(43) Date of publication of application: **21.07.2021**
(21) Application number: 20193957.6
(22) Date of filing: 01.09.2020
(51) Int. Cl.: C09J 7/10, B05D 1/16, B32B 5/02

(54) **BONDABLE STRETCH FLOCK COMPOSITE MATERIALS**

(30) Priority: 17.01.2020 US 202062962548 P; 05.08.2020 US 202016985474
(71) Applicant: SPECTRO COATING CORPORATION, Leominster, MA 01453 (US)
(72) Inventor: HASKELL, Gregory Howard, Groton, MA 01450 (US); SHAH, Rajesh Hemendra, Lexington, MA 02421 (US)
(74) Representative: Slingsby Partners LLP

(57) **Abstract**

A composite flock material including a base layer comprising a hot melt adhesive, an elastic adhesive layer disposed on a top surface of the hot melt adhesive, and a plurality of flock fibers potted into the elastic adhesive layer is disclosed. The composite flock material is stretchable up to 20% from an initial unstretched length while maintaining the structural integrity of the composite flock material. Methods of producing a composite flock material are also disclosed.

In a preferred embodiment, the elastic adhesive layer comprises silicone.

## Description

### CROSS-REFERNCE TO RELATED APPLICATIONS

This application claims priority under 35 U.S.C. § 119(e) to U.S. Provisional Application Serial No. 62/962,548, titled "Bondable Stretch Flock Composite Materials" filed January 17, 2020, which is incorporated herein by reference in its entirety for all purposes.

### FIELD OF TECHNOLOGY

Aspects and embodiments disclosed herein are directed to composite flocked materials for use in the greater fabrics industry.

### SUMMARY

In accordance with one aspect, there is provided composite flock material. The composite flock material may comprise a base layer comprising a hot melt adhesive, an elastic adhesive layer disposed on a top surface of the hot melt adhesive, and a plurality of flock fibers potted into the elastic adhesive layer. The composite flock material may be stretchable up to 20% from an initial unstretched length while maintaining the structural integrity of the composite flock material.

In some embodiments, the base layer comprises polyurethane. In some embodiments, the base layer comprises polypropylene. In some embodiments, the base layer comprises a monolayer. In some embodiments, the base layer comprises a plurality of layers. In certain embodiments, the base layer has a thickness of about 10 µm to 250 µm.

In some embodiments, the elastic adhesive layer is water-based. In other embodiments, the elastic adhesive layer is solvent-based. In further embodiments, the elastic adhesive layer is a solid adhesive. The elastic adhesive layer may have a thickness of about 50 µm to 500 µm. In certain embodiments, the elastic adhesive layer has an average mass of 2 ounces per square yard to about 6 ounces per square yard.

In some embodiments, the plurality of flock fibers comprises a fiber selected from the group consisting of rayon, nylon, polyester, acrylic, cotton, and copolymers thereof. In some embodiments, the plurality of flock fibers have an average length of about 250 µm to about 3000 µm and an average diameter of about 5 µm to about 100 µm. In particular embodiments, no more than about 10% of the average length of each of the plurality of flock fibers is potted into the elastic adhesive layer. In some embodiments, the plurality of flock fibers have an average density of about 1 ounces per square yard to about 5 ounces per square yard on the surface of the elastic adhesive layer.

In accordance with one aspect, there is provided a method of producing a composite flock material. The method may comprise steps of providing a base layer comprising a hot melt adhesive having a top surface and a bottom surface, applying an elastic adhesive layer to the top surface of the base layer, and potting a plurality of flock fibers into the elastic adhesive layer. The composite flock material may be stretchable up to 20% from an initial unstretched length while maintaining the structural integrity of the composite flock material.

In further embodiments, the method may comprise curing the composite flock material. After curing the composite flock material, the elastic adhesive layer may maintain its elasticity. The plurality of potted flock fibers are in contact only with the elastic adhesive layer after the composite flock material is cured.

In some embodiments, the potting includes mechanically potting the plurality of flock fibers.

In some embodiments, the potting includes electrostatically potting the plurality of flock fibers.

In some embodiments, the plurality of flock fibers comprises a fiber selected from the group consisting of rayon, nylon, polyester, acrylic, and copolymers thereof. In particular embodiments, no more than about 10% of the average length of each of the plurality of flock fibers is potted into the elastic adhesive layer. In some embodiments, the plurality of flock fibers have an average length of about 250 µm to about 3000 µm and an average diameter of about 5 µm to about 100 µm. In some embodiments, the plurality of flock fibers have an average density of about 1 ounces per square yard to about 5 ounces per square yard on the surface of the elastic adhesive layer.

In certain embodiments, the base layer has a thickness of about 10 µm to 250 µm.

In some embodiments, the elastic adhesive layer is water-based. In other embodiments, the elastic adhesive layer is solvent-based. In further embodiments, the elastic adhesive layer is a solid adhesive. The elastic adhesive layer may have a thickness of about 50 µm to 500 µm. In certain embodiments, the elastic adhesive layer has an average mass of 2 ounces per square yard to about 6 ounces per square yard.

In accordance with one aspect, there is provided a method of producing a composite flock material. The method may comprise steps of providing a base layer comprising a hot melt adhesive having a top surface and a bottom surface, applying an elastic adhesive layer to the top surface of the base layer, potting a plurality of flock fibers into the elastic adhesive layer, and curing the elastic layer to set the plurality of flock fibers. The curing may comprise heating the composite flock material to a first temperature for a first period of time and heating the composite flock material to a second temperature for a second period of time, the second temperature being greater than the first temperature. The first and second temperatures and the first and second periods of time may be determined by at least one of a bonding condition of the base layer, a thickness of the elastic adhesive layer, and a composition of the elastic adhesive layer.

In further embodiments, the method may comprise heating the composite flock material to a third temperature for a third period of time, the third temperature being greater than the second temperature. The third temperature and third period of time may be determined by at least one of a bonding condition of the base layer, a thickness of the elastic adhesive layer, and a composition of the elastic adhesive layer.

In further embodiments, the method may comprise cooling the cured composite flock material to a temperature less than the first temperature. In some embodiments, the elastic adhesive layer maintains its elasticity after curing the composite flock material.

In some embodiments, the first temperature may be from about 80°C to about 180°C. In some embodiments, the second temperature may be from about 100°C to about 200°C. In some embodiments, the third temperature may be from about 120°C to about 240°C.

In some embodiments, the first period of time may be from about 1 minute to 60 minutes. In some embodiments, the second period of time may be from about 1 minute to 60 minutes. In some embodiments, the third period of time may be from about 1 minute to 60 minutes.

In some embodiments, the composite flocked material produced by the method described herein may be stretchable up to 20% from an initial unstretched length while maintaining the structural integrity of the composite flock material.

In some embodiments, the elastic adhesive layer is water-based. In some embodiments, the elastic adhesive layer is solvent-based. In certain embodiments, the elastic adhesive layer comprises silicone. In some embodiments, the elastic adhesive layer is a solid adhesive. In certain embodiments, the elastic adhesive layer may have a thickness of about 50 µm to about 500 µm.

In some embodiments, the bonding condition of the base layer may be from about 120°C to about 220°C.

In accordance with one aspect, there is provided a method of producing a composite flock material. The method may comprise steps of providing a base layer comprising a hot melt adhesive having a top surface and a bottom surface, applying an elastic adhesive layer to the top surface of the base layer and potting a plurality of flock fibers into the elastic adhesive layer. The potting of the plurality of flock fibers may comprise applying a surface charge to the plurality of flock fibers and depositing the plurality of flock fibers onto the elastic adhesive layer. The depositing may allow for up to about 10% of an average length of each of the plurality of flock fibers to be potted into the elastic adhesive layer.

In some embodiments, the composite flocked material produced by the method described herein may be stretchable up to 20% from an initial unstretched length while maintaining the structural integrity of the composite flock material.

In further embodiments, the method may comprise curing the composite flock material. In some embodiments, the plurality of potted flock fibers are in contact only with the elastic adhesive layer after the composite flock material is cured. In some embodiments, the elastic adhesive layer maintains its elasticity after curing the composite flock material.

In some embodiments, applying the surface charge to the plurality of flock fibers may comprise applying a constant voltage to the plurality of flock fibers. The voltage applied to the plurality of flock fibers may be from about 5,000 V to 200,000 V.

In further embodiments, the depositing may comprise forcing the plurality of flock fibers through a distributor comprising a plurality of nozzles positioned above the top surface. The plurality of flock fibers may be forced through the distributor under the force of gravity or by a gas delivered to the distributor.

In further embodiments, the method may comprise agitating the distributor.

In further embodiments, the method may comprise agitating the plurality of flock fibers deposited on the elastic adhesive layer.

In accordance with one aspect, there is provided composite flock material. The composite flock material may comprise a base layer comprising a hot melt adhesive, an elastic adhesive layer disposed on a top surface of the hot melt adhesive, and a plurality of flock fibers potted into the elastic adhesive layer. The composite flock material may be stretchable up to 20% from an initial unstretched length while maintaining the structural integrity of the composite flock material.

In some embodiments, the base layer comprises polyurethane. In certain embodiments, the base layer has a thickness of about 10 µm to 250 µm. In some embodiments, the elastic adhesive layer is water-based. For example, the water-based adhesive may comprise silicone. The elastic adhesive layer may have a thickness of about 50 µm to 500 µm.

In some embodiments, the plurality of flock fibers comprises a fiber selected from the group consisting of rayon, nylon, polyester, acrylic, cotton, and copolymers thereof. In some embodiments, the plurality of flock fibers have an average length of about 250 µm to about 3000 µm and an average diameter of about 5 µm to about 100 µm. In particular embodiments, no more than about 10% of the average length of each of the plurality of flock fibers is potted into the elastic adhesive layer.

In accordance with one aspect, there is provided a method of producing a composite flock material. The method may comprise steps of providing a base layer comprising a hot melt adhesive having a top surface and a bottom surface, applying an elastic adhesive layer to the top surface of the base layer, potting a plurality of flock fibers into the elastic adhesive layer, and curing the elastic layer to set the plurality of flock fibers. The curing may comprise heating the composite flock material to a first temperature for a first period of time and heating the composite flock material to a second temperature for a second period of time, the second temperature being greater than the first temperature. The first and second temperatures and the first and second periods of time may be determined by at least one of a bonding condition of the base layer, a thickness of the elastic adhesive layer, and a composition of the elastic adhesive layer.

In further embodiments, the method may comprise heating the composite flock material to a third temperature for a third period of time, the third temperature being greater than the second temperature. The third temperature and third period of time may be determined by at least one of a bonding condition of the base layer, a thickness of the elastic adhesive layer, and a composition of the elastic adhesive layer.

In further embodiments, the method may comprise cooling the cured composite flock material to a temperature less than the first temperature. In some embodiments, the elastic adhesive layer maintains its elasticity after curing the composite flock material.

In some embodiments, the first temperature may be from about 80°C to about 180°C. In some embodiments, the second temperature may be from about 100°C to about 200°C.

In some embodiments, any of the first period and second period of time may be from about 1 minute to 60 minutes.

In some embodiments, the composite flocked material produced by the method described herein may be stretchable up to 20% from an initial unstretched length while maintaining the structural integrity of the composite flock material.

In certain embodiments, the elastic adhesive layer comprises silicone. In some embodiments, the bonding condition of the base layer may be from about 120°C to about 220°C.

In accordance with one aspect, there is provided a method of producing a composite flock material. The method may comprise steps of providing a base layer comprising a hot melt adhesive having a top surface and a bottom surface, applying an elastic adhesive layer to the top surface of the base layer, and potting a plurality of flock fibers into the elastic adhesive layer. The potting of the plurality of flock fibers may comprise applying a surface charge to the plurality of flock fibers and depositing the plurality of flock fibers onto the elastic adhesive layer. The depositing may allow for up to about 10% of an average length of each of the plurality of flock fibers to be potted into the elastic adhesive layer.

In some embodiments, the composite flocked material produced by the method described herein may be stretchable up to 20% from an initial unstretched length while maintaining the structural integrity of the composite flock material.

In further embodiments, the method may comprise curing the composite flock material. In some embodiments, the elastic adhesive layer maintains its elasticity after curing the composite flock material. In some embodiments, the plurality of potted flock fibers are in contact only with the elastic adhesive layer after the composite flock material is cured.

In some embodiments, applying the surface charge to the plurality of flock fibers may comprise applying a constant voltage to the plurality of flock fibers. The voltage applied to the plurality of flock fibers may be from about 5,000 V to 200,000 V.

In further embodiments, the method may comprise agitating the plurality of flock fibers deposited on the elastic adhesive layer. In certain embodiments, the elastic adhesive layer comprises silicone.

In accordance with one aspect, there is provided a method of producing a composite flock material. The method may comprise steps of providing a base layer comprising a hot melt adhesive, the base layer having a top surface and a bottom surface, applying an elastic adhesive layer to the top surface of the base layer, and potting a plurality of flock fibers into the elastic adhesive layer. The composite flock material produced may be stretchable up to 20% from an initial unstretched length while maintaining the structural integrity of the composite flock material.

### BRIEF DESCRIPTION OF THE DRAWINGS

The patent or application file contains at least one drawing executed in color. Copies of this patent or patent application publication with color drawing(s) will be provided by the Office upon request and payment of the necessary fee.

The accompanying drawings are not drawn to scale. In the drawings, each identical or nearly identical component that is illustrated in the various figures is represented by a like numeral. For purposes of clarity, not every component may be labeled in every drawing. In the drawings:
FIG. 1 shows a schematic of a composite flock material, according to one embodiment described herein,
FIG. 2 shows a flow diagram of a method of producing a composite flock material, according to one embodiment described herein,
FIG. 3 shows a flow diagram of a method of producing a composite flock material, according to one embodiment described herein,
FIGS. 4A and 4B show photographs of a traditional flocked material that has been stretched to the point of fracture (FIG. 4A) and subsequently released (FIG. 4B), and
FIGS. 5A and 5B show photographs of a traditional flocked material (FIG. 5A) and a composite flock material as described herein (FIG. 5B) that have been stretched to the same distance.

### DETAILED DESCRIPTION

It is to be appreciated that embodiments of the methods and apparatuses discussed herein are not limited in application to the details of construction and the arrangement of components set forth in the following description or illustrated in the accompanying drawings. The methods and apparatuses are capable of implementation in other embodiments and of being practiced or of being carried out in various ways. Examples of specific implementations are provided herein for illustrative purposes only and are not intended to be limiting. Also, the phraseology and terminology used herein is for the purpose of description and should not be regarded as limiting. As used herein, the term "plurality" refers to two or more items or components. The terms "comprising," "including," "carrying," "having," "containing," and "involving," whether in the written description or the claims and the like, are open-ended terms, i.e., to mean "including but not limited to." Thus, the use of such terms is meant to encompass the items listed thereafter, and equivalents thereof, as well as additional items. Only the transitional phrases "consisting of' and "consisting essentially of," are closed or semi-closed transitional phrases, respectively, with respect to the claims.

References to "or" may be construed as inclusive so that any terms described using "or" may indicate any of a single, more than one, and all of the described terms.

As used herein, "about" refers to +/- 20% of a recited value.

As used herein, a "mil" is a unit of measure that refers to one thousandth of an inch, i.e., 1 mil is equivalent to 0.001".

Flocking is a process where large quantities of particulates, such as a textile fiber, are deposited onto and affixed to a substrate. Flocking has been used to improve the visual appearance of materials, e.g., by adding visual contrast with texture or color, and to improve performance by the addition of a surface texture for enhancing friction and/or grip.

Flocked materials presently used in the garment industry can suffer from known drawbacks. For example, traditional flocked materials that are bondable to substrates have limited, if any, elasticity. In these implementations, traditional flocked materials will suffer damage to their structural integrity, e.g., fracture, split, crack, or break, if stretched and may further detach from the substrate to which they are applied. On the other hand, recently developed stretchable flocked materials have elasticity that maintains the integrity of the flock when stretched but typically exhibit poor adhesion to substrates. These stretchable flocked materials are known to readily delaminate and lack durability under processes typical of the garment and fabrics industry, such as residential and commercial laundering and taber or abrasion testing.

In accordance with at least one aspect described herein, there is provided a composite flock material that is configured to be stretchable from an initial unstretched length without impacting the structural integrity of the flock. By structural integrity, it is meant that the underlying base material(s) that the flock fibers are in contact with do not exhibit any physical damage, such as breaking, cracking, or tearing, when the composite flock material is stretched and subsequently retuned to its initial unstretched length. In some embodiments, the composite flock material maintains its lamination to the underlying material to which it is applied after stretching.

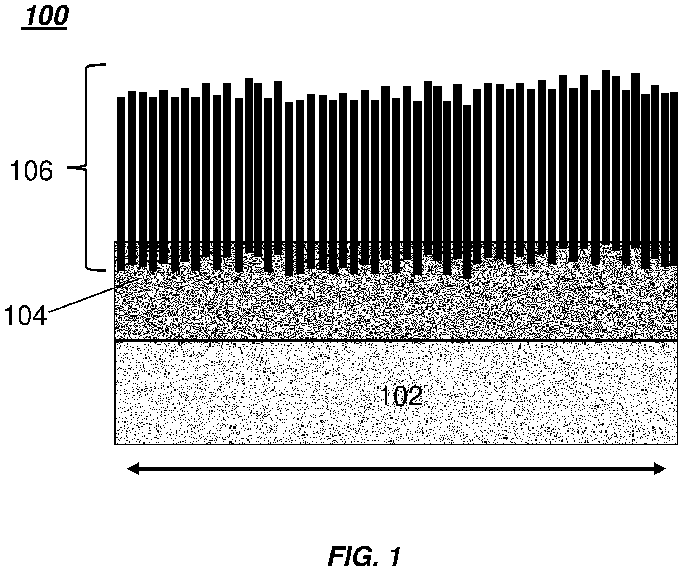

In at least one embodiment, the composite flock material includes a base layer, an elastic adhesive layer, and a plurality of flock fibers potted into the elastic adhesive layer. The base layer may include a hot melt adhesive. The elastic adhesive layer may be disposed on a top surface of the hot melt adhesive. The composite flock material may be stretchable up to 20%, e.g., up to 1%, 2%, 3%, 4%, 5%, 6%, 7%, 8%, 9%, 10%, 11%, 12%, 13%, 14%, 15%, 16%, 17%, 18%, 19%, or 20% from an initial unstretched length while maintaining the structural integrity of the composite flock material. A schematic of one embodiment of a composite flocked material having a base layer, an elastic adhesive later, and a plurality of flock fibers potted into the adhesive layer is shown in FIG. 1.

In FIG. 1, there is provided a schematic of one embodiment of a composite flock material 100 that includes a base layer 102, an elastic adhesive layer 104, and a plurality of flock fibers 106. The elastic adhesive layer 104 is applied to a top surface of the base layer 102. The plurality of flock fibers 106 are potted vertically into the exposed portion of the elastic adhesive layer 104. The double ended arrow below the base layer 102 indicates that the composite flock material 100 is configured to stretch along its horizonal axis, i.e., parallel to the arrow shown. As shown in FIG. 1, less than about 10% of the average length of each of the plurality of flock fibers is potted into the elastic adhesive layer.

The base layer 102 may include a monolayer of hot melt adhesive. Alternatively, the base layer 102 may include a plurality of layers of hot melt adhesive. For example, a hot melt adhesive may include anywhere from 1 to 25 layers, e.g., 1 layer, 2 layers, 3 layers, 4 layers, 5 layers, 6 layers, 7 layers, 8 layers, 9 layers, 10 layers, 11 layers, 12 layers, 13 layers, 14 layers, 15 layers, 16 layers, 17 layers, 18 layers, 19 layers, 20 layers, 21 layers, 22 layers, 23 layers, 24 layers, or 25 layers. In some embodiments, the total thickness of the base layer may be from about 10 µm to about 250 µm, e.g., about 10 µm to about 50 µm, about 25 µm to about 100 µm, about 50 µm to about 150 µm, about 75 µm to about 200 µm, or about 100 µm to about 250 µm, e.g., about 10 µm, about 20 µm, about 30 µm, about 40 µm, about 50 µm, about 60 µm, about 70 µm, about 80 µm, about 90 µm, about 100 µm, about 110 µm, about 120 µm, about 130 µm, about 140 µm, about 150 µm, about 160 µm, about 170 µm, about 180 µm, about 190 µm, about 200 µm, about 210 µm, about 220 µm, about 230 µm, about 240 µm, or about 250 µm. In some cases, the thickness of the base layer may be from about 1 mil to about 8 mil, e.g., about 1 mil to about 3 mil, about 2 mil to about 4 mil, about 3 mil to about 6 mil, or about 4 mil to about 8 mil, e.g., about 1 mil, about 2 mil, about 3 mil, about 4 mil, about 5 mil, about 6 mil, about 7 mil, or about 8 mil.

In some embodiments, the hot melt adhesive of the base layer 102 may be any suitable hot melt adhesive that upon being applied to a substrate with heat and, optionally, pressure, remains elastic without delaminating from the substrate. Suitable hot melt adhesives for the base layer include, but are not limited to, polyurethane, polyolefins, e.g., polypropylene, thermoplastic elastomers, ethylene-vinyl acetate (EVA) copolymers, ethylene-acrylate copolymers, polyamides, polyesters, fluoropolymers, styrene block copolymers, and silicone rubber. Other hot melt adhesives are known in the art.

Hot melt adhesives may have a bonding condition from about 120°C to about 220°C, e.g., about 120°C to about 150°C, about 130°C to about 160°C, about 140°C to about 170°C, about 150°C to about 180°C, about 160°C to about 190°C, about 170°C to about 200°C, about 180°C to about 210°C, or about 190°C to about 220°C, e.g., about 120°C, about 130°C, about 140°C, about 150°C, about 160°C, about 170°C, about 180°C, about 190°C, about 200°C, about 210°C, or about 220°C.

By bonding condition, it is meant the minimum temperature at which the adhesive of the hot melt adhesive becomes adherable to a substrate.

In some embodiments, the adhesive used for the elastic adhesive layer 104 may be formulated using a base that is chemically compatible with the hot melt adhesive of the base layer 102 that it is to be applied to, minimizes impact to the environment, and is sufficiently workable such that it can be applied to the top surface of the hot melt adhesive with precision. Once the elastic adhesive layer 104 is cured, the cured elastic adhesive should be resistant to damage from laundering or washing, should retain its elasticity after being stretched, and should be sufficiently durable to not become excessively damaged during durability testing, e.g., abrasion or taber testing.

The elastic adhesive layer 104 may be applied to the top surface of the hot melt adhesive of base layer102 either as a liquid adhesive or as a solid adhesive. For example, when a liquid adhesive is utilized, the elastic adhesive may be a water-based formulation; alternatively, the elastic adhesive may be a solvent-based formulation using a solvent that has a boiling point approximately the boiling point of water or lower than the boiling point of water. In some embodiments, the adhesive of the liquid elastic adhesive layer may have an adherent, i.e., nonsolvent, content from about 20% to about 60%, e.g., from about 20% to about 30%, about 25% to about 35%, about 30% to about 40%, about 35% to about 45%, about 40% to about 50%, about 45% to about 55%, or about 50% to about 60%, e.g., about 20%, about 25%, about 30%, about 35%, about 40%, about 45%, about 50%, about 55%, or about 60%. Exemplary liquid adhesives for use as an elastic adhesive layer 104 include water-based blended adhesives comprising urethane and silicone. Other suitable adhesives are known in the art.

When applied to the top surface of the base layer 102, the elastic adhesive layer 104 is present in amount such that additional materials applied to the elastic adhesive layer 104, such as flock fibers, are adhered with enough hold to not come free when subjected to applied forces, e.g., handling or laundering. The elastic adhesive layer 104 is also sufficiently thick to ensure that the additional materials applied to the elastic adhesive layer do not contact the underlying base layer 102. This prevents the base layer 102 from being perforated or otherwise damaged, thus assisting in maintaining the structural integrity of the composite flock material 100 when it is stretched. The elastic adhesive layer 104 may be characterized by the thickness of an applied layer of the elastic adhesive or the mass of the elastic adhesive applied per unit area of base layer. In some embodiments, the thickness of the elastic adhesive layer 104 may be from about 50 µm to 500 µm, e.g., about 50 µm to about 200 µm, about 100 µm to about 300 µm, about 200 µm to 400 µm, or about 300 µm to 500 µm, e.g., about 50 µm, about 60 µm, about 70 µm, about 80 µm, about 90 µm, about 100 µm, about 150 µm, about 200 µm, about 250 µm, about 300 µm, about 350 µm, about 400 µm, about 450 µm, or about 100 µm. In some embodiments, the thickness of the elastic adhesive layer 104 may be from about 1 mil to about 20 mil, e.g., about 1 mil to 5 mil, about 3 mil to 7 mil, about 5 mil to 10 mil, about 7 mil to 12 mil, about 10 mil to 14 mil, about 12 mil to about 16 mil, about 14 mil to about 18 mil, or about 16 mil to about 20 mil, e.g., about 1 mil, about 2 mil, about 3 mil, about 4 mil, about 5 mil, about 6 mil, about 7 mil, about 8 mil, about 9 mil, about 10 mil, about 11 mil, about 12 mil, about 13 mil, about 14 mil, about 15 mil, about 16 mil, about 17 mil, about 18 mil, about 19 mil, or about 20 mil. When characterized as a mass of elastic adhesive applied per square yard of base layer, the mass of elastic adhesive applied per square yard may be from about 2 ounces (oz.) per square yard to about 6 oz. per square yard, e.g., about 2 oz. per square yard to about 3.5 oz. per square yard, about 2.5 oz. per square yard to about 4 oz. per square yard, about 3 oz. per square yard to about 4.5 oz. per square yard, about 3.5 oz. per square yard to about 5 oz. per square yard, or about 4 oz. per square yard to about 6 oz. per square yard, e.g., about 2 oz. per square yard, about 2.5 oz. per square yard, about 3 oz. per square yard, about 3.5 oz. per square yard, about 4 oz. per square yard, about 4.5 oz. per square yard, about 5 oz., about 5.5 oz. per square yard, or about 6 oz per square yard.

The material used for the plurality of flock fibers 106 may be chosen for a specific application. As a non-limiting example, when used for a wearable garment, the fiber material for the plurality of flock fibers 106 may be suited for the application of fabric dyes or have a surface texture that is suitable for contact with the skin of a person donning the garment. As another non-limiting example, for an application directed to grip enhancement or surface preparation, such as polishing pads or sanding belts, the fiber material for the plurality of flock fibers 106 may be chosen for abrasion resistance or the amount of friction generated in contact with a surface. In some embodiments, the plurality of flock fibers 106 may be a material that includes, but is not limited to, rayon, e.g., viscose, nylon, polyester, acrylic, and copolymers thereof. One of skill in the art would appreciate that the choice of material for the flock fibers will depend on the end-use application of the composite flock material.

In some embodiments, the plurality of flock fibers 106 have an average length of about 250 µm to about 3000 µm, e.g., about 250 µm to about 750 µm, about 500 µm to about 1000 µm, about 750 µm to about 1250 µm, about 1000 µm to about 1500 µm, about 1250 µm to about 1750 µm, about 1500 µm to about 2000 µm, about 1750 µm to about 2250 µm, about 2000 µm to about 2500 µm, about 2250 µm to about 2750 µm, or about 2500 µm to about 3000 µm, e.g., about 250 µm, about 500 µm, about 750 µm, about 1000 µm, about 1250 µm, about 1500 µm, about 1750 µm, about 2000 µm, about 2250 µm, about 2500 µm, about 2750 µm, or about 3000 µm.

As described herein, materials applied to the elastic adhesive layer 104, such as the flock fibers 106, only contact the elastic adhesive layer 104 and do not penetrate and contact the underlying base layer 102. In some embodiments, no more than about 10% of the average length of each of the plurality of flock fibers is potted into the elastic adhesive layer. For example, no more than about 1%, about 2%, about 3%, about 4%, about 5%, about 6%, about 7%, about 8%, about 9%, or about 10% of the average length of each of the plurality of flock fibers is potted into the elastic adhesive layer. The potted depth of each of the plurality of flock fibers 106, e.g., no more that 10% of the average length of the flock fibers 106, is sufficient to ensure that the flock fibers 106 are irremovably held to the base layer 102 and elastic adhesive layer 104 and can withstand externally applied forces, e.g., laundering or contact with surfaces. The potted depth of each of the plurality of flock fibers 106 is further sufficient that the flock fibers, when potted, do not puncture the base layer 102 and/or elastic adhesive layer 104. This prevents the formation of stress points on the base layer 102 and elastic adhesive layer 104 and allows the composite flock material to stretch without damaging the underlying base materials.

The average diameter of a fibrous material, also known as the denier (den), is a function of the density of the fiber's material and accounts for variations in the diameter over the extruded length of the fiber. In some embodiments, the plurality of flock fibers 106 may have a denier of about 0.6 den to about 6 den, e.g., about 0.6 den to about 1 den, about 0.8 den to about 3 den, about 2 den to about 4 den, about 3 den to about 5 den, about 4 den to about 6 den, e.g., about 0.6 den, 0.7 den, 0.8 den, 0.9 den, about 1 den, about 1.5 den, about 2 den, about 2.5 den, about 3 den, about 3.5 den, about 4 den, about 4.5 den, about 5 den, about 5.5 den, or about 6 den. In some embodiments, the plurality of flock fibers 106 may have an average diameter of about 1 µm to about 100 µm, e.g., about 1 µm to about 10 µm, about 5 µm to about 25 µm, about 10 µm to about 50 µm, about 25 µm to about 75 µm, or about 50 µm to about 100 µm, e.g., about 1 µm, about 2 µm, about 3 µm, about 4 µm, about 5 µm, about 6 µm, about 7 µm, about 8 µm, about 9 µm, about 10 µm, about 15 µm, about 20 µm, about 25 µm, about 30 µm, about 35 µm, about 40 µm, about 45 µm, about 50 µm, about 55 µm, about 60 µm, about 65 µm, about 70 µm, about 75 µm, about 80 µm, about 85 µm, about 90 µm, about 95 µm, or about 100 µm.

The average density of the flock fibers 106 on the surface of the elastic adhesive layer 104 is a function of the average diameter/denier of the flock fibers, the average length of flock fibers, and the specific gravity of the flock fibers which is dependent on the specific fiber material. Without wishing to be bound by any particular theory, the application of short and fine flock fibers, e.g., less than 1 denier or having an average fiber diameter of about 10 µm or less, requires a lower mass of the flock fibers to be applied to elastic adhesive layer to achieve the a target average density than longer and coarser fibers. In some embodiments, the plurality of flock fibers 106 have an average density of about 1 oz. per square yard to about 5 oz. per square yard on the surface of the elastic adhesive layer, e.g., about 1 oz. to about 2 oz., about 1.5 oz. to about 2.5 oz., about 2 oz. to about 3 oz., about 2.5 oz. to about 3.5 oz., about 3 oz. to about 4 oz., about 3.5 oz. to about 4.5 oz., or about 5 oz. per square yard, e.g., about 1 oz., about 1.5 oz., about 2 oz., about 2.5 oz., about 3 oz., about 3.5 oz., about 4 oz., about 4.5 oz., or about 5 oz. per square yard. One of skill in the art would appreciate that the density of flock fibers 106 applied to the elastic adhesive layer 104 for forming a composite flock material may be chosen for a particular end-use application of the composite flock material.

Composite flocked materials as disclosed herein are advantageous in that the material may stretch without compromising the structural integrity of the flock fibers and has excellent adhesion to a variety of substrates. Without wishing to be bound by any particular theory or mechanism of action, composite flocked materials as described herein are stretchable without damage, at least in part, because of the elasticity of both the hot melt adhesive that comprises the base layer 102 and the elastic adhesive layer 104. These layers may be stretched after the curing and/or after application to a substrate, and as the flock fibers 106 are directly potted into the elastic adhesive layer 104, the flock fibers 106 move with the elastic adhesive layer 104 and the base layer 102. Moreover, the flock fibers 106 are potted no more than 10% of their average length into the elastic adhesive layer 104. This prevents the flock fibers 106 from puncturing the base layer 102 and thus prevents the creation of perforations in both the elastic adhesive layer 104 and baser layer 102 where the forces from stretching the composite flocked material would serve as stress points.

In accordance with another aspect, there is provided a method of producing a composite flock material (e.g., a composite flock material as similarly described above with respect to FIG. 1). The method may comprise providing a base layer comprising a hot melt adhesive. The base layer may have a top surface and a bottom surface. The method may further comprise applying an elastic adhesive layer to the top surface of the base layer. The method may additionally comprise potting a plurality of flock fibers into the elastic adhesive layer. The composite flock material may be stretchable up to 20%, e.g., up to 1%, 2%, 3%, 4%, 5%, 6%, 7%, 8%, 9%, 10%, 11%, 12%, 13%, 14%, 15%, 16%, 17%, 18%, 19%, or 20% from an initial unstretched length while maintaining the structural integrity of the composite flock material.

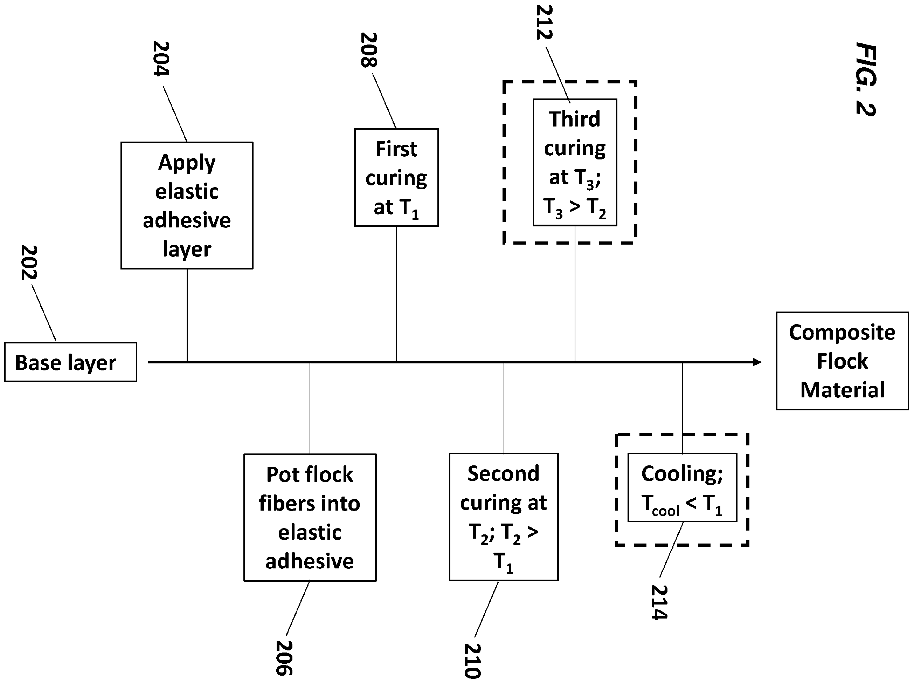

In accordance with another aspect, there is provided a method of producing a composite flock material (e.g., a composite flock material as similarly described above with respect to FIG. 1), with a schematic of an embodiment of a method of this disclosure illustrated in FIG. 2. With reference to FIG. 2, the method may comprise a step 202 of providing a base layer having a top surface and bottom surface that comprises a hot melt adhesive as described herein. The base layer comprising the hot melt adhesive may have an elastic adhesive layer applied to its top surface in step 204. After application of the elastic adhesive layer to the top surface of the base layer, the method may comprise a step 206 that includes the potting of a plurality of flock fibers into the elastic adhesive layer using any of the deposition processes as described herein. The potted plurality of flock fibers may be secured to the elastic adhesive layer by a first curing step 208 comprising heating the potted plurality of flock fibers to a first temperature for a first period of time. The method may further comprise a second curing step 210 comprising heating the potted plurality of flock fibers to a second temperature for a second period of time. The second temperature may be greater than the first temperature. The first and second temperatures and the first and second periods of time may be determined by at least one of a bonding condition of the base layer, a thickness of the elastic adhesive layer, and a composition of the elastic adhesive layer. In FIG. 2, steps that are enclosed in dashed line boxes are optional steps that may be included in the method. With continued reference to FIG. 2, the method of producing a composite flock material may include a third heating step 212 comprising heating the potted plurality of flock fibers to a third temperature for a third period of time. The third temperature may be greater than the second temperature. At least one of the third temperature and third period of time are determined by at least one of a bonding condition of the base layer, a thickness of the elastic adhesive layer, and a composition of the elastic adhesive layer. With continued reference to FIG. 2, the method of producing a composite flock material may include a cooling step 214 comprising cooling the cured composite flock material to a temperature less than the first temperature.

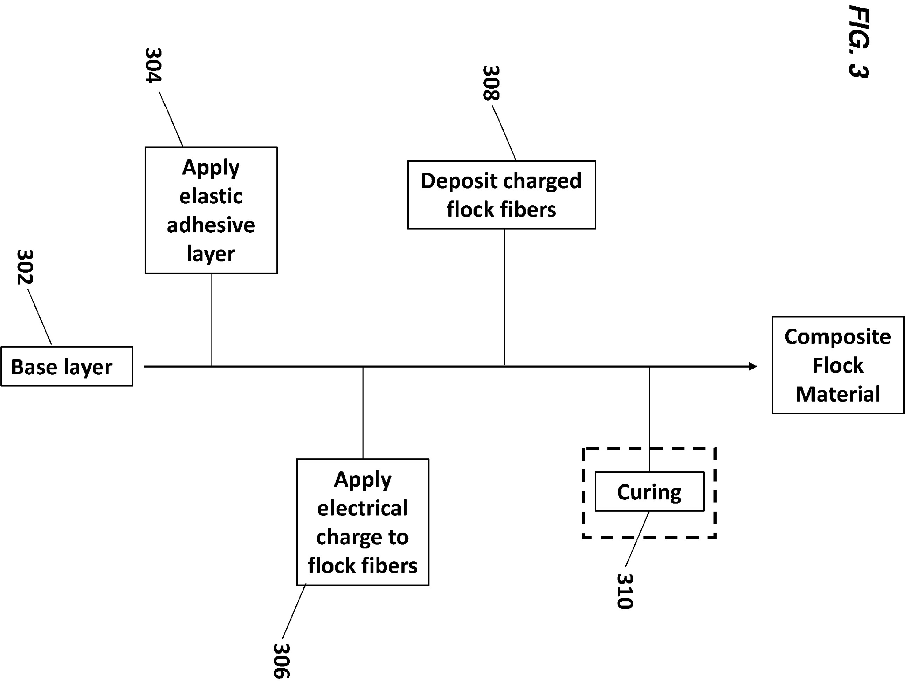

In accordance with another aspect, there is provided a method of producing a composite flock material (e.g., a composite flock material as similarly described above with respect to FIG. 1), with a schematic of an embodiment of a method of this disclosure illustrated in FIG. 3. With reference to FIG. 3, the method may comprise a step 302 of providing a base layer having a top surface and bottom surface that comprises a hot melt adhesive as described herein. The base layer comprising the hot melt adhesive may have an elastic adhesive layer applied to its top surface in step 304. A plurality of flock fibers may be potted into the elastic adhesive layer by a step 306 comprising applying a surface charge to the plurality of flock fibers. After application of the surface charge to the plurality of flock fibers, the method may comprise a step 308 that includes depositing the plurality of flock fibers onto the elastic adhesive layer using any of the deposition processes as described herein. The depositing of the plurality of flock fibers may allow for up to about 10% of an average length of each of the plurality of flock fibers to be potted into the elastic adhesive layer. In FIG. 3, the step that is enclosed in the dashed line box is an optional step that may be included in the method. With continued reference to FIG. 3, the method of producing a composite flock material may include curing of the potted plurality of flock fibers. The curing of the potted plurality of flock fibers may be achieved using any of the curing processes described herein.

In any of the methods disclosed herein, a composite flock material produced by the methods may be stretchable up to 20%, e.g., up to 1%, 2%, 3%, 4%, 5%, 6%, 7%, 8%, 9%, 10%, 11%, 12%, 13%, 14%, 15%, 16%, 17%, 18%, 19%, or 20% from an initial unstretched length while maintaining the structural integrity of the composite flock material.

As described herein, methods of the invention may include curing the composite flock material. Curing solidifies the elastic adhesive layer to ensure that the plurality of flock fibers are irremovably held to the base layer without warping the base layer. For a liquid elastic adhesive layer, the curing temperature is sufficient to evaporate any base liquid or solvent from the elastic adhesive layer, such as water, without degrading the adhesive itself. The curing may be performed at a single temperature for a fixed period of time. In some embodiments, the curing may be a multi-step process having two or more individual curing steps. The curing of the elastic adhesive layer may further comprise heating the composite flock material to a third temperature for a third period of time, with the third temperature being greater than the second temperature. At least one of the third temperature and third period of time are determined by at least one of a bonding condition of the base layer, a thickness of the elastic adhesive layer, and a composition of the elastic adhesive layer. As a non-limiting example, a method may include a three-step curing process, with a first heating step to heat the composite flock material to a first temperature, a second heating step to heat the composite flock material to a second temperature that is greater than the first temperature, and a third heating step to heat the composite flock material to a third temperature that is greater than the second temperature. The use of differential heating from the first temperature to the third temperature ensures that the liquid component of the elastic adhesive layer, be it water or a solvent, is evaporated slowly and evenly from the elastic adhesive layer. This minimizes shrinkage and warping of the elastic adhesive layer and reduces the formation of a "skin" on the elastic adhesive layer that would reduce further evaporation of the liquid components. Substantially complete evaporation of the liquid component of the elastic adhesive layer helps to ensure a secure hold of the plurality of flock fibers in the elastic adhesive layer.

In some embodiments, the first temperature may be from about 80°C to about 180°C, e.g., about 80°C to about 100°C, about 90°C to about 110°C, about 100°C to about 120°C, about 110°C to about 130°C, about 120°C to about 140°C, about 130°C to about 150°C, about 140°C to about 160°C, about 150°C to about 170°C, or about 160°C to about 180°C, e.g., about 80°C, about 90°C, about 100°C, about 110°C, about 120°C, about 130°C, about 140°C, about 150°C, about 160°C, about 170°C, or about 180°C.

In some embodiments, the second temperature may be from about 100°C to about 200°C, e.g., about 100°C to about 120°C, about 110°C to about 130°C, about 120°C to about 140°C, about 130°C to about 150°C, about 140°C to about 160°C, about 150°C to about 170°C, about 160°C to about 180°C, about 170°C to about 190°C, or about 180°C to about 200°C, e.g., about 100°C, about 110°C, about 120°C, about 130°C, about 140°C, about 150°C, about 160°C, about 170°C, about 180°C, about 190°C, or about 200°C.

In some embodiments, the third temperature may be from about 120°C to about 240°C, e.g., about 120°C to about 150°C, about 130°C to about 160°C, about 140°C to about 170°C, about 150°C to about 180°C, about 160°C to about 190°C, about 170°C to about 200°C, about 180°C to about 210°C, about 190°C to about 220°C, about 200°C to about 230°C, or about 210°C to about 240°C, e.g., about 120°C, about 130°C, about 140°C, about 150°C, about 160°C, about 170°C, about 180°C, about 190°C, about 200°C, about 210°C, about 220°C, about 230°C, or about 240°C.

As disclosed herein, the curing of the composite flock material may be performed for a fixed period of time. For a multi-step curing process, each of the individual heating steps may be performed for the same length of time. Alternatively, each of the individual heating steps may be performed for a different length of time. For example, in a curing process comprising three heating steps at different temperatures, each of the three heating steps may occur for the same length of time, each for a different length of time, or any combination, e.g., steps 1 and 3 may occur for the same length of time. One of skill in the art will appreciate that the curing time necessary for the composite flock material may depend on a number of aspects of the composite flock material including, but not limited to, the bonding condition of the hot melt adhesive of the base layer, the thickness or mass of elastic adhesive layer applied to the base layer, the chemical composition of the elastic adhesive layer, i.e., water or solvent base, and the material of the flock fibers.

In some embodiments, any of the first, second, and third periods of time may have a duration from about 1 minute to 60 minutes, e.g., about 1 minute to about 5 minutes, about 2 minutes to about 6 minutes, about 5 minutes to about 10 minutes, about 7 minutes to about 11 minutes, about 9 minutes to about 15 minutes, about 12 minutes to about 20 minutes, about 15 minutes to about 25 minutes, about 20 minutes to about 30 minutes, about 25 minutes to about 35 minutes, about 30 minutes to about 40 minutes, about 35 minutes to about 45 minutes, about 40 minutes to about 50 minutes, about 45 minutes to about 55 minutes, or about 50 minutes to about 60 minutes, e.g., about 1 minute, about 2 minutes, about 3 minutes, about 4 minutes, about 5 minutes, about 6 minutes, about 7 minutes, about 8 minutes, about 9 minutes, about 10 minutes, about 11 minutes, about 12 minutes, about 13 minutes, about 14 minutes, about 15 minutes, about 16 minutes, about 17 minutes, about 18 minutes, about 19 minutes, about 20 minutes, about 22 minutes, about 24 minutes, about 26 minutes, about 28 minutes, about 30 minutes, about 32 minutes, about 34 minutes, about 36 minutes, about 38 minutes, about 40 minutes, about 42 minutes, about 44 minutes, about 46 minutes, about 48 minutes, about 50 minutes, about 52 minutes, about 54 minutes, about 56 minutes, about 58 minutes, or about 60 minutes.

Curing of the composite flock material may be performed in any suitable apparatus, such as a temperature-controlled oven, furnace, or the like. Aspects of the curing process, e.g., time and temperature, may be chosen to ensure that the elastic adhesive layer maintains its elasticity after curing the composite flock material, i.e., the composite flock material remains stretchable up to 20%, e.g., up to 1%, 2%, 3%, 4%, 5%, 6%, 7%, 8%, 9%, 10%, 11%, 12%, 13%, 14%, 15%, 16%, 17%, 18%, 19%, or 20% from an initial unstretched length while maintaining the structural integrity of the composite flock material after curing.

In some embodiments, the cured composite flock material may be cooled to a temperature less than the first temperature. The cooling may occur within the apparatus used to cure the composite flock material. Alternatively, the cooling may occur with the composite flock material removed from the apparatus used for curing, such as a temperature-controlled chamber or similar. The cooling may be passive, i.e., no external sources of a cooling agent applied to the cured composite flock material. In some embodiments, cooling may occur actively, i.e., by the application of a cooling agent, such as air from a cooling fan or storage in a refrigerated room. For example, cooling of the cured composite flock material may occur under room temperature, i.e., 25°C, while the composite flock material is being manipulated for storage and/or packaging.

In some embodiments of the methods disclosed herein, no more than about 10%, e.g., no more than about 1%, about 2%, about 3%, about 4%, about 5%, about 6%, about 7%, about 8%, about 9%, or about 10%, of an average length of each of the plurality of flock fibers as described herein is potted into the elastic adhesive layer. The control of the potting depth of the plurality of flock fibers ensures that the potted flock fibers do not penetrate the elastic adhesive layer and puncture the base layer and are only in contact with the elastic adhesive layer. The potting of only a portion, e.g., less than about 10%, of the average length of the flock fibers into the elastic adhesive layer allows the composite flock material to stretch without impacting the structural integrity of the composite flock material. As discussed herein, potting only a portion of the average length of the flock fibers, i.e., no more than 10% of the average length of the flock fibers, prevents the flock fibers from puncturing the base layer, thus preventing the creation of perforations in the base layer and elastic adhesive layer where the forces from stretching the composite flocked material would serve as stress points.

The potting depth of the flock fibers may be, in part, controlled by how the flock fibers are potted into the elastic adhesive layer. In some embodiments, the potting of the flock fibers may include mechanically potting the flock fibers. Mechanical potting may include, but is not limited to, vibratory potting, gravity assisted potting, or air assisted potting of the flock fibers. As a non-limiting example, the flock fibers may be potted into the elastic adhesive layer using a distributor comprising a plurality of nozzles that deposit the flock fibers onto the elastic adhesive layer. The distributor may be connected to a source of the plurality of flock fibers, such as a vessel or holding tank, and positioned above the top surface of the base layer, i.e., where the elastic adhesive layer was applied. The distributor may allow the flock fibers to pass through its plurality of nozzles under the force of gravity. Alternatively, the distributor may be connected to a source of a gas, such as compressed air, that provides a pulse of gas to the distributor to force the flock fibers through the plurality of nozzles. In some embodiments, the distributor and/or the source of the flock fibers may be connected to a source of vibrational energy that is configured to agitate the distributor while flock fibers are being deposited. In this configuration, the agitation of the distributor and/or source of flock fibers reduces clogging of the flock fibers and assists with an even distribution of the flock fibers on the substrate, e.g., the elastic adhesive layer.

Alternatively, or in addition, the potting of the flock fibers may include electrostatically potting the flock fibers. In an electrostatic flocking process, the flock fibers are given a negative surface charge by the application of a high voltage electric field to a source of the flock fibers, such as a vessel or holding tank. The voltage applied to the plurality of flock fibers may either be an alternating current (AC) voltage or a direct current (DC) voltage. The negatively charged flock fibers are then directed to the material to be flocked, such as the base layer with a top surface including an elastic adhesive layer, that is held at electrical ground. The difference in potential between the negatively charged flock fibers and the surface on which the base layer is located allows the flock fibers to be precisely positioned and to maintain a perpendicular orientation to the substrate. The charged flock fibers may be directed to the substrate using any mechanical potting technique as described herein.

In some embodiments, the voltage applied to the plurality of flock fibers may be from about 5,000 V to about 200,000 V, e.g., about 5,000 V to about 25,000 V, about 10,000 to about 40,000 V, about 20,000 V to about 60,000 V, about 40,000 V to 80,000 V, about 50,000 V to about 100,000 V, about 70,000 V to about 120,000 V, about 100,000 V to about 140,000 V, about 120,000 V to about 160,000 V, about 140,000 V to about 180,000 V, or about 160,000 V to about 200,000 V, e.g., about 5,000 V, about 10,000 V, about 20,000 V, about 30,000 V, about 40,000 V, about 50,000 V, about 60,000 V, about 70,000 V, about 80,000 V, about 90,000 V, about 100,000 V, about 110,000 V, about 120,000 V, about 130,000 V, about 140,000 V, about 150,000 V, about 160,000 V, about 170,000 V, about 180,000 V, about 190,000 V, or about 200,000 V.

Mechanical and electrostatic potting provides for flock fibers that are potted in the elastic adhesive layer perpendicular to the axis of the substrate, e.g., vertical. Vertical flock fiber orientation maximizes the flock density of the composite flock material and ensures that the potted fibers are securely held into the elastic adhesive layer. In some embodiments, the method may further comprise agitating the plurality of flock fibers deposited on the elastic adhesive layer. The agitation of deposited flock fibers may be configured to change the orientation of fibers that did not pot vertically into the elastic adhesive layer. For example, agitation of the composite flock material may occur by a source of vibrational energy positioned below the composite flock material. In this configuration, energizing the source of vibrational energy allows for vibrations to contact the composite flock material and reorient flock fibers that were not aligned vertically when deposited.

In some embodiments of the method, the plurality of flock fibers may be a material that includes, but is not limited to, rayon, e.g., viscose, nylon, polyester, acrylic, cotton, and copolymers thereof as described herein. One of skill in the art would appreciate that the choice of material for the flock fibers will depend on the end-use application of the composite flock material.

In some embodiments of the method, the base layer may have a thickness of about 10 µm to about 250 µm. In some embodiments, the elastic adhesive layer may be water-based or may be solvent-based. In some embodiments, the elastic adhesive layer has a thickness of about 50 µm to about 500 µm. In some embodiments, the elastic adhesive layer has an average mass of about 2 ounces per square yard to about 6 ounces per square yard. In some embodiments, the plurality of flock fibers have an average length of about 250 µm to about 3000 µm. In some embodiments, no more than about 10% of the average length of each of the plurality of flock fibers is potted into the elastic adhesive layer. In some embodiments, the plurality of flock fibers have an average diameter of about 5 µm to about 100 µm. In some embodiments, the plurality of flock fibers have an average density of about 1 ounces per square yard to about 5 ounces per square yard on the surface of the elastic adhesive layer.

### EXAMPLE

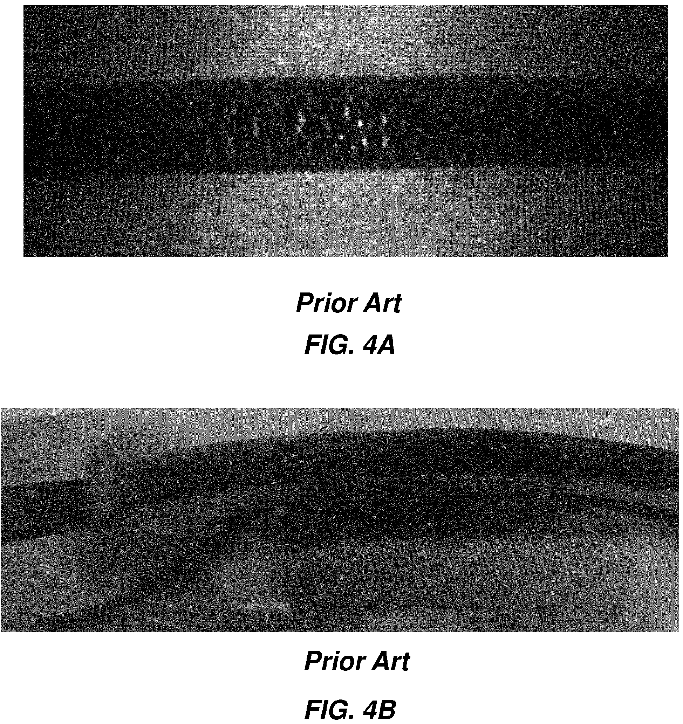

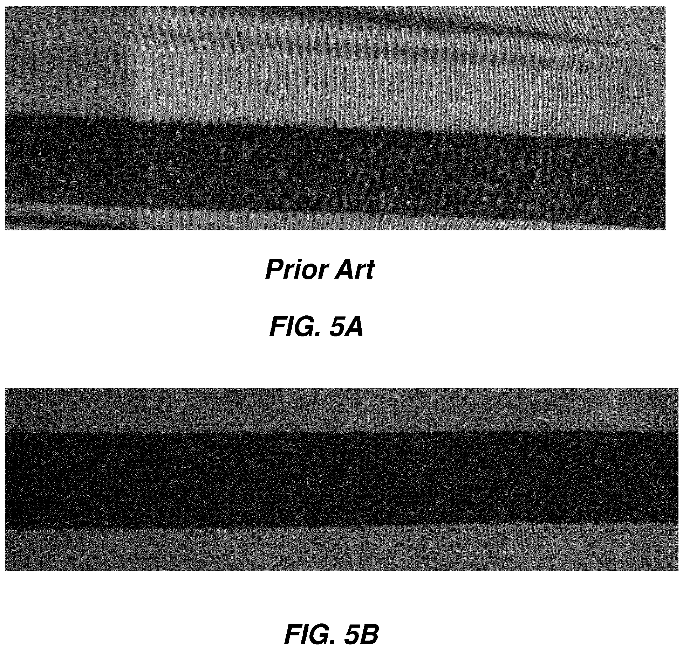

FIGS. 4A, 4B, 5A, and 5B provide a comparison between a traditional flocked material (FIG. 4A, 4B, and 5A) and a composite flock material as described herein (FIG. 5B). In these figures, the black portion is the flock and the blue portion is the underlying fabric base the flock is applied to.

FIGS. 4A and 4B illustrate a traditional flocked material that has been stretched. As seen in FIG. 4A, stretching the traditional flocked material results in the cracking of the flock portion once the tension is released from the stretching. FIG. 4B illustrates a zoomed-out view of the stretched traditional flocked material of FIG. 4A showing that the fabric base has not returned to its pre-stretched length, indicating that the traditional flocked material lacks elasticity when the structural integrity of the flock portion is compromised.

FIGS. 5A and 5B illustrate a traditional flocked material (FIG. 5A) and a composite flock material as described herein (FIG. 5GB) that have been stretched. Each of the materials shown in FIGS. 5A and 5B has been stretched the same distance. As is seen in FIGS. 5A and 5B, the composite flock material shown in FIG. 5B does not exhibit any cracking or splitting of the flock fiber layer after stretching. In contrast, the traditional flocked material shown in FIG. 5A displays clear cracking of the flock fiber layer along the weave lines of the fabric substrate that the traditional flocked material is applied to.

Having thus described several aspects of at least one embodiment, it is to be appreciated various alterations, modifications, and improvements will readily occur to those skilled in the art. Any feature described in any embodiment may be included in or substituted for any feature of any other embodiment. Such alterations, modifications, and improvements are intended to be part of this disclosure and are intended to be within the scope of the invention. Accordingly, the foregoing description and drawings are by way of example only.

Those skilled in the art should appreciate that the parameters and configurations described herein are exemplary and that actual parameters and/or configurations will depend on the specific application in which the disclosed methods and materials are used. Those skilled in the art should also recognize or be able to ascertain, using no more than routine experimentation, equivalents to the specific embodiments disclosed.

## Claims

1. A method of producing a composite flock material, comprising:
providing a base layer comprising a hot melt adhesive, the base layer having a top surface and a bottom surface;
applying an elastic adhesive layer to the top surface of the base layer;
potting a plurality of flock fibers into the elastic adhesive layer; and
curing the elastic adhesive layer to set the plurality of flock fibers, the curing comprising:
heating the composite flock material to a first temperature for a first period of time; and
heating the composite flock material to a second temperature for a second period of time, the second temperature being greater than the first temperature,
the first and second temperatures and the first and second periods of time determined by at least one of a bonding condition of the base layer, a thickness of the elastic adhesive layer, and a composition of the elastic adhesive layer.

2. The method of claim 1, further comprising heating the composite flock material to a third temperature for a third period of time, the third temperature being greater than the second temperature.

3. The method of claim 1 or 2, further comprising cooling the cured composite flock material to a temperature less than the first temperature.

4. The method of any one of claims 1-3, wherein the elastic adhesive layer maintains its elasticity after curing the composite flock material.

5. The method of any one of claims 1-4, wherein:
(a) the first temperature is from about 80°C to about 180°C; or
(b) the second temperature is from about 100°C to about 200°C.

6. The method of any one of claims 1-5, wherein any of the first period and second period of time is from about 1 minute to 60 minutes.

7. The method of any one of claims 1-6, wherein the produced composite flock material is stretchable up to 20% from an initial unstretched length while maintaining the structural integrity of the composite flock material.

8. The method of any one of claims 1-7, wherein the elastic adhesive layer comprises silicone.

9. The method of any one of claims 1-8, wherein the bonding condition of the base layer is from about 120°C to about 220°C.

10. The method of any one of claims 1-9, wherein the potting comprises applying a surface charge to the plurality of flock fibers to deposit the plurality of flock fibers onto the elastic adhesive layer.

11. The of any one of claim 10, wherein applying the surface charge to the plurality of flock fibers comprises applying a constant voltage to the plurality of flock fibers.

12. The method of claim 11, wherein the constant voltage is from about 5,000 V to about 200,000 V.

13. The method of any one of claims 1-12, wherein the potting of the plurality of flock fibers allows for up to about 10% of an average length of each of the plurality of flock fibers to be potted into the elastic adhesive layer.

14. The method of claim 13, wherein: the plurality of potted flock fibers are in contact only with the elastic adhesive layer after the composite flock material is cured.

15. The method of any one of claims 1-14, further comprising agitating the plurality of flock fibers deposited on the elastic adhesive layer.
